# FASCICULE DE BREVET EUROPEEN

(11) **EP 1 607 682 B1**
(45) Date de publication et mention de la délivrance du brevet: **08.06.2016**
(21) Numéro de dépôt: 05291174.0
(22) Date de dépôt: 01.06.2005
(51) Int. Cl.: F01D 9/02, F01D 9/04

(54) **Turbine à gaz**
Gasturbine
Gas turbine

(30) Priorité: 17.06.2004 FR 0406594
(43) Date de publication de la demande: 21.12.2005
(73) Titulaire: SNECMA, 75015 Paris (FR)
(72) Inventeur: Aumont, Caroline, 75012 Paris (FR); Conete, Eric, 33700 Merignac (FR); De Sousa, Mario César, 77240 Cesson La Foret (FR); Hernandez, Didier Hippolyte, 77720 Quiers (FR)
(74) Mandataire: Delumeau, François Guy

(56) Documents cités:
- DE-C- 949 824
- FR-A- 942 230
- FR-A- 2 825 780
- FR-A- 2 825 787
- US-A- 6 000 906

## Description

### Arrière-Plan de l'invention

L'invention se rapporte aux turbines à gaz notamment pour moteurs d'avions ou turbines industrielles. Elle concerne plus particulièrement un montage étanche d'un distributeur de turbine haute pression (HP) à l'extrémité aval d'une chambre de combustion.

Dans une turbine à gaz comportant une chambre de combustion annulaire, il a déjà été proposé de monter le distributeur de turbine haute pression (HP) en le reliant mécaniquement à une partie d'extrémité aval de la chambre de combustion (dans toute la demande, les termes amont et aval sont utilisés avec référence à la direction d'écoulement des gaz de combustion produits dans la chambre). L'ensemble formé par la chambre de combustion et le distributeur de turbine HP peut alors être supporté par des viroles de liaison reliées à des enveloppes métalliques interne et externe.

Une telle disposition permet d'assurer une meilleure continuité de la veine d'écoulement des gaz à l'interface entre chambre de combustion et distributeur de turbine, et permet aussi d'assurer plus facilement l'étanchéité au niveau de cette interface, en comparaison avec une disposition dans laquelle la chambre de combustion et le distributeur de turbine HP sont reliés séparément aux enveloppes métalliques interne et externe.

Une chambre de combustion avec distributeur de turbine intégré à sa partie d'extrémité aval est montrée dans le document FR 2 825 787. La chambre de combustion est en matériau composite à matrice céramique (CMC) et l'ensemble chambre de combustion/distributeur de turbine HP est maintenu entre les enveloppes métalliques interne et externe au moyen de viroles de liaison métalliques souples qui sont sectorisées pour permettre une adaptation aux différences entre les coefficients de dilatation du métal et du matériau composite céramique.

Le distributeur de turbine comprend une pluralité d'aubes fixes solidaires de plates-formes internes et externes en forme de secteurs d'anneaux juxtaposés dont des faces intérieures délimitent une veine d'écoulement dans le distributeur de turbine d'un flux gazeux issu de la chambre de combustion. La liaison mécanique entre distributeur et chambre de combustion est réalisée au moyen de tiges filetées et écrous, les tiges filetées étant solidaires de plates-formes des aubes du distributeur et s'engageant dans des encoches formées dans les parties d'extrémité aval des parois interne et externe de la chambre de combustion.

Une étanchéité peut ainsi être assurée à l'interface entre chambre de combustion et distributeur de turbine. Toutefois il reste nécessaire d'assurer l'étanchéité de la veine dans le distributeur de turbine au niveau des interfaces entre les plates-formes d'aubes.

### Objet et présumé de l'invention

L'invention a pour but de réaliser un montage optimisé d'un distributeur de turbine HP à l'extrémité d'une chambre de combustion permettant de résoudre simplement le problème d'étanchéité de la veine d'écoulement du flux gazeux non seulement au niveau de l'interface entre chambre de combustion et distributeur de turbine, mais aussi le long de celui-ci.

Ce but est atteint grâce à une turbine à gaz telle que définie par la revendication 1.

Ainsi l'étanchéité entre les plates-formes internes et entre les plates-formes externes du distributeur de turbine est réalisée par les parties d'extrémité des parois interne et externe de la chambre de combustion, ces parties d'extrémité étant munies de trous pour le passage des vis de liaison au niveau de pales du distributeur, et éventuellement pour le passage d'air de refroidissement vers le distributeur haute pression, mais présentant sinon une continuité circonférentielle.

Avantageusement, l'ensemble formé par la chambre de combustion et le distributeur de turbine est maintenu entre des enveloppes métalliques interne et externe au moyen de viroles respectives interne et externe, et les viroles interne et externe ont des parties d'extrémité reliées à l'ensemble formé par la chambre de combustion et le distributeur de turbine au moyen desdites vis de liaison.

De préférence, la partie d'extrémité aval de la paroi interne de la chambre de combustion est pincée entre les plates-formes internes des aubes et une couronne interne s'appuyant sur la face extérieure de la partie d'extrémité de la paroi interne de la chambre de combustion, ladite partie d'extrémité de la virole interne pouvant alors venir en appui sur une face extérieure de la couronne interne. Avantageusement, la couronne interne est solidaire d'une bride radiale annulaire qui coopère avec une bride radiale annulaire de l'enveloppe métallique interne pour maintenir entre elles un joint d'étanchéité annulaire fermant l'espace compris entre la paroi interne de la chambre de combustion et l'enveloppe métallique interne au voisinage de l'extrémité aval du distributeur de turbine.

De préférence aussi, et de façon similaire, la partie d'extrémité aval de la paroi externe de la chambre de combustion est pincée entre les plates-formes externes des aubes et une couronne externe s'appuyant sur la face extérieure de la partie d'extrémité aval de la paroi externe de la chambre de combustion, ladite partie d'extrémité de la virole externe pouvant alors venir en appui sur une face extérieure de la couronne externe. Avantageusement, la couronne externe est solidaire d'une bride radiale annulaire qui coopère avec une bride radiale annulaire solidaire de l'enveloppe métalliques externe pour maintenir entre elles un joint d'étanchéité annulaire fermant l'espace compris entre la paroi externe de la chambre de combustion et l'enveloppe métallique externe au voisinage de l'extrémité aval du distributeur de turbine.

Selon une autre particularité de l'invention, des moyens de blocage sont en outre prévus pour immobiliser en rotation le distributeur de turbine afin d'éviter que des efforts en rotation induits par l'interaction entre les aubes fixes du distributeur de turbine et le flux gazeux issu de la chambre de combustion soient transmis aux viroles interne et externe.

Avantageusement, les moyens de blocage comportent des éléments de blocage mutuel en rotation agissant sur l'une au moins des paires de brides radiales entre lesquelles des joints d'étanchéité annulaires sont maintenus.

### Brève description des dessins

L'invention sera mieux comprise à la lecture de la description faite ci-après, à titre indicatif mais non limitatif, en référence aux dessins annexes sur lesquels :
- la figure 1 est une schématique en demi-coupe axiale montrant une partie de turbine à gaz ;
- les figures 2 et 3 sont des vues partielles en perspective montrant l'assemblage de la partie d'extrémité aval de la chambre de combustion avec le distributeur de turbine HP et les viroles de liaison dans la turbine à gaz de la figure 1 ; et
- les figures 4 et 5 sont des vues de détail montrant des variantes de réalisation du blocage en rotation du distributeur de turbine HP.

### Description détaillée de modes de réalisation

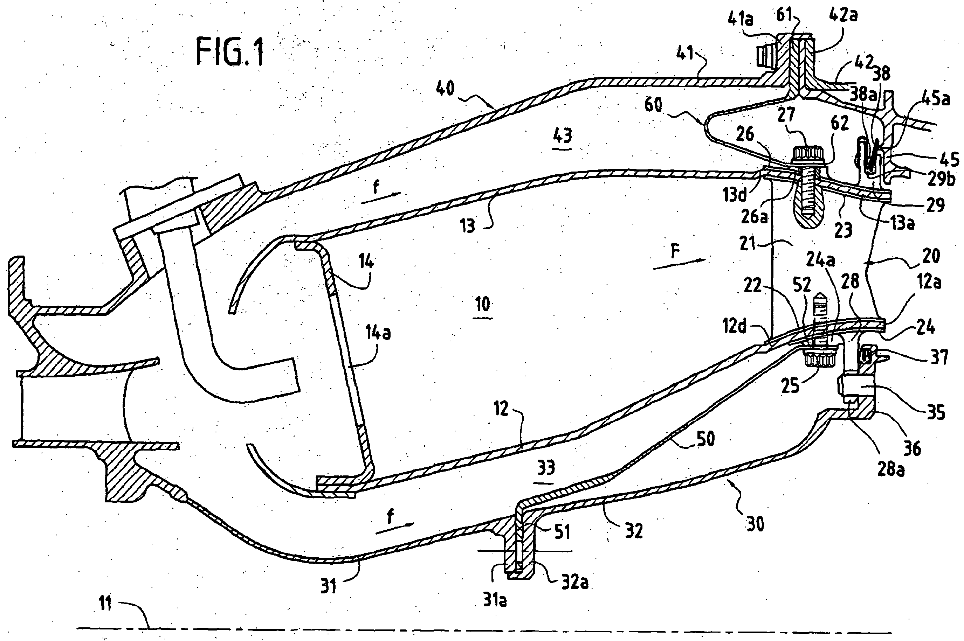

La figure 1 montre en demi-coupe axiale une partie d'une turbine à gaz comprenant une chambre de combustion annulaire 10, un distributeur de turbine haute pression 20 relié mécaniquement à une partie d'extrémité aval de la chambre 10, des enveloppes métalliques annulaires interne 30 et externe 40 et des viroles de liaison 50, 60 maintenant l'ensemble formé par la chambre 10 et le distributeur 20 dans l'espace délimité par les enveloppes 30 et 40.

La chambre de combustion 10 est délimitée par une paroi annulaire interne 12 et une paroi annulaire 13 externe ayant même axe 11 et une paroi de fond amont 14 fixée aux parois 12 et 13. De façon bien connue en soi, la paroi de fond 14 présente une série d'orifices 14a répartis autour de l'axe 11 pour le logement d'injecteurs permettant l'injection de carburant et comburant dans la chambre.

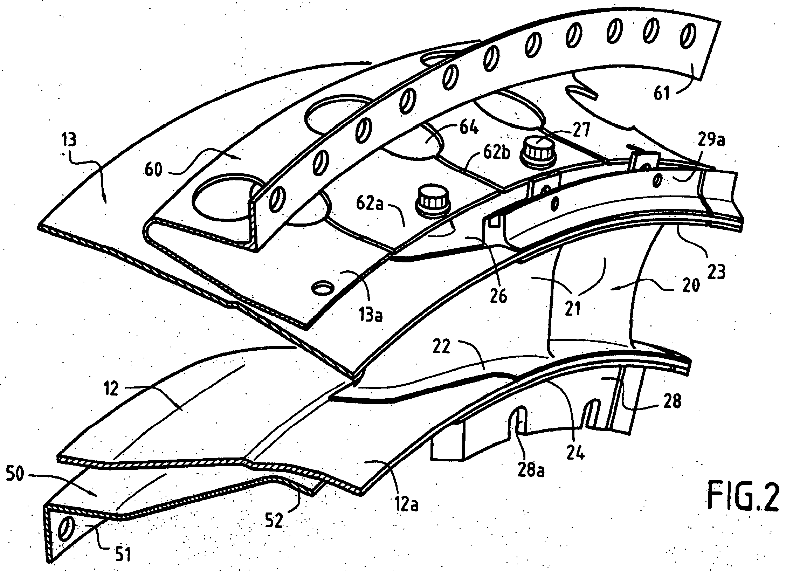

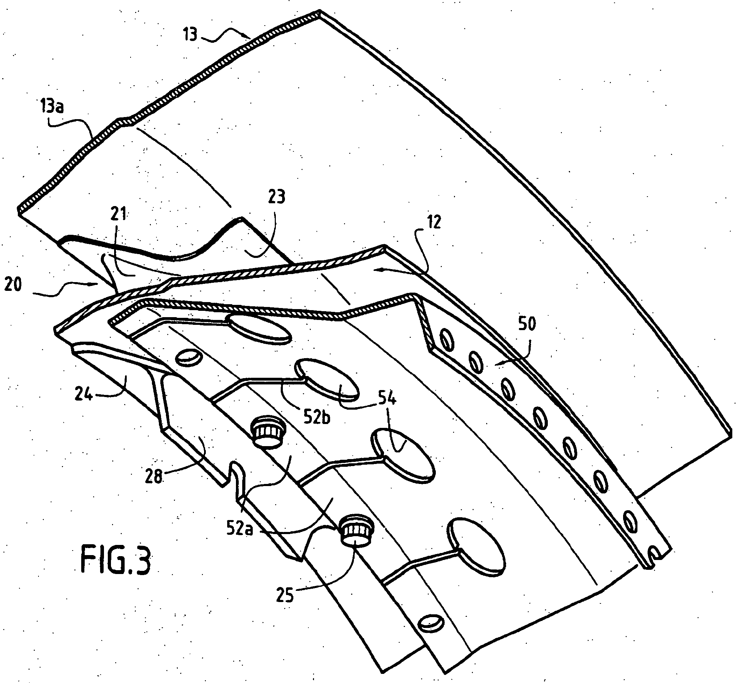

Le distributeur de turbine HP 20, qui constitue l'étape d'entrée de la turbine, comporte une pluralité d'aubes fixes réparties angulairement autour de l'axe 11. Comme le montrent les figures 2 et 3, les aubes comportent des pales 21 solidaires à leurs extrémités de plates-formes internes 22 et externes 23 en forme de secteurs d'anneau juxtaposés. Les faces intérieures des plates-formes 22, 23 définissant la veine d'écoulement de gaz à travers le distributeur. Chaque paire de plates-formes interne et externe peut être associée à une ou plusieurs pales.

L'enveloppe métallique interne 30 est en deux parties 31, 32 réunies par boulonnage au niveau de brides intérieures respectives 31a, 32a. De même, l'enveloppe métallique 40 externe est en deux parties 41, 42 réunies par boulonnage au niveau de brides extérieures respectives 41a, 42a. L'espace 33 entre la paroi interne 12 de la chambre 10 et l'enveloppe interne 30 et l'espace 43 entre la paroi externe 13 de la chambre 10 et l'enveloppe externe 40 sont parcourus par un flux secondaire d'air de refroidissement (flèches f) contournant la chambre 10.

La virole de liaison interne 50 présente, dans l'exemple illustré, une première extrémité 51 en forme de bride qui est reliée à l'enveloppe interne 30 en étant enserrée entre les brides 31a, 32a et boulonnée avec celles-ci. A son autre extrémité 52, la virole 50 est reliée à la partie d'extrémité aval 12a de la paroi interne 12 de la chambre 10. Sur la partie s'étendant dans l'espace 33, la virole 50 a une forme incurvée avec une section sensiblement en S afin de présenter la souplesse requise pour s'adapter aux dilatations différentielles radiales entre la chambre 10 et l'enveloppe 30 en particulier lorsque la chambre 10 est en CMC.

Dans ce dernier cas notamment, on réalise en outre une sectorisation de la virole 50 en une pluralité de pattes 52a à partir de son extrémité 52 et sur une certaine distance en direction de son extrémité 51. Cette sectorisation peut être réalisée par des fentes 52b séparant les pattes 52a et s'étendant entre l'extrémité 52 et des trous 54 formés dans la virole 50 et répartis angulairement autour de l'axe 11 pour permettre le passage du flux d'air secondaire dans l'espace 33. Les fentes 52b permettent une adaptation aux dilatations différentielles en direction circonférentielle.

La virole de liaison 60 présente, dans l'exemple illustré, une première extrémité 61 en forme de bride qui est reliée à l'enveloppe externe 40 en étant enserrée entre les brides 41a, 42a et boulonnée avec celles-ci. A son autre extrémité 62, la virole 60 est reliée à la partie d'éxtrémité aval de la paroi externe 13 de la chambre 10. Sur la partie s'étendant dans l'espace 43, la virole a une forme incurvée avec une section sensiblement en V afin de présenter la souplesse requise pour s'adapter aux dilatations différentielles entre l'enveloppe 40 et la chambre 10 en particulier lorsque celle-ci est en CMC. Dans ce dernier cas notamment, on réalise en outre une sectorisation de la virole 60 en une pluralité de pattes 62a de façon similaire à celle de la virole 50. Ainsi, des fentes 62b séparant les pattes 62a sont formées à partir de l'extrémité 62 de la virole et sur une certaine distance en direction de l'extrémité 61, par exemple jusqu'à des trous 64 permettant le passage du flux secondaire dans l'espace 43.

Dans le cas où les parois de la chambre de combustion sont réalisées en matériau métallique réfractaire, une sectorisation des viroles 50 et 60 peut ne pas être nécessaire.

Bien entendu, on pourra relier les extrémités 51 et 61 des viroles 50, 60 aux enveloppes interne 30 et externes 40 à un autre niveau que celui des brides 31a, 32a, et 41a, 42a.

La paroi interne 12 de la chambre 10 a sa partie d'extrémité aval 12a qui s'appuie sur la face extérieure des plates-formes 22, sensiblement jusqu'à l'extrémité aval de celles-ci. Une couronne interne sectorisée 24 vient en appui sur la face extérieure de la partie d'extrémité 12a de la paroi interne de chambre. La couronne 24 est formée de secteurs d'anneau juxtaposés correspondant par exemple, mais non nécessairement, aux plates-formes internes 22. Les secteurs de la couronne 24 présentent des bossages 24a sur lesquels s'appuie l'extrémité sectorisée 52 de la virole 50. Des vis de liaison interne sensiblement radiales 25 traversent des trous formés dans les pattes 52a de la virole 50, dans la couronne interne 24, au niveau de bossages 24a et dans la partie d'extrémité 12a de la paroi interne 12 de la chambre et sont vissées dans des trous borgnes taraudés formés sensiblement radicalement dans des plates-formes interne 22 et des pales 21 (voir le détail de la figure 1). Des vis de liaison 25 pourront être prévues au niveau de chaque pale 21 ou de certaines d'entre elles seulement.

De la même manière, la paroi externe 13 de la chambre 10 a sa partie d'extrémité aval 13a qui s'appuie sur la face extérieure des plates-formes 23, sensiblement jusqu'à l'extrémité aval de celles-ci. Une couronne externe sectorisée 26 vient en appui sur la face extérieure de la partie d'extrémité 13a de la paroi externe de chambre. La couronne 26 est formée de secteurs d'anneau juxtaposées correspondant par exemple, mais non nécessairement, aux plates-formes externes 23. Les secteurs de la couronne 26 présentent des bossages 26a sur lesquels s'appuie l'extrémité sectorisée 62 de la virole 60. Des vis de liaison externes sensiblement radiales 27 traversent des trous formés dans les pattes 62a de la virole 60, dans la couronne externe 26 au niveau de bossages 26a et dans la partie d'extrémité 13a de la paroi externe 13 de la chambre et sont vissées dans des trous borgnes taraudés formés sensiblement radialement dans les plates-formes externes 23 et des pales 21 (voir le détail, de la figure 1). Des vis de liaison 27 pourront être prévues au niveau de chaque pale 21 ou de certaines d'entre elles seulement.

Lorsque le montage le permet, les couronnes interne 24 et/ou externe 26 pourront être non sectorisées, étant alors réalisées en une seule pièce ou en plusieurs parties soudées ensembles dans le cas, de préférence, où les matériaux des composants ont des coefficients de dilatation proches.

Ainsi, du fait qu'elles présentent une continuité circonférentielle jusqu'à l'extrémité aval du distributeur de turbine, les parties d'extrémité 12a et 13a des parois de la chambre assurent l'étanchéité ente plates-formes internes 22 et entre plates-formes externes 23. Il n'est alors pas nécessaire de mettre en place des tôles d'étanchéité utilisées habituellement à cet effet pour garantir l'étanchéité de la veine d'écoulement du flux gazeux dans le distributeur, d'où des gains de masse et de temps de montage.

Par ailleurs le pincement de parties d'extrémité des parois de la chambre de combustion entre plate-forme et couronne consolide l'extrémité de la chambre au niveau de la liaison avec le distributeur de turbine, ce qui est avantageux lorsque la chambre est réalisée en CMC pouvant présenter une certaine fragilité.

En outre, la continuité des parois 12 et 13 de la chambre de combustion 10 à l'interface entre la chambre et le distributeur de turbine 20 permet d'assurer l'étanchéité de la veine d'écoulement du flux gazeux au niveau de cette interface. De plus, afin d'assurer une bonne continuité de la veine d'écoulement du flux gazeux primaire (flèches F), des légers décochements 12d, 13d sont prévus au niveau du raccordements des parties d'extrémité 12a, 13a avec le reste des parois 12, 13, comme montré sur la figure 1. Ainsi la veine d'écoulement en sortie de chambre peut se raccorder sensiblement sans discontinuité avec la veine d'écoulement dans le distributeur.

Des orifices (non représentés) sont formés dans les plates-formes 22, 23, et communiquent avec des orifices formés dans les parties d'extrémité 12, 13 des parois de la chambre 10 et dans les couronnes 24, 26 pour permettre le passage d'air de refroidissement des espaces 33, 43 vers les aubes fixes 21 du distributeur 20.

Avantageusement, des moyens de blocage sont prévus pour immobiliser le distributeur 20 en rotation sans induire d'efforts circonférentiels ou de cisaillement sur les parties des viroles de liaison 50, 60 s'étendant dans les espaces 33, 43.

Dans le mode de réalisation des figures 1 à 3, les moyens de blocage sont constitués par des doigts 35 qui sont solidaires de l'enveloppe interne 30 et qui pénètrent dans des encoches radiales 28a formées dans une bride sectorisée 28 solidaire de la couronne sectorisée 24. Dans l'exemple illustré, les doigts 35 s'étendent axialement et sont répartis angulairement autour de l'axe 11 en étant portés par une bride radiale 36 solidaire de l'enveloppe 30 sensiblement au niveau de l'extrémité aval du distributeur 20. Les doigts 35 peuvent être fixés à la bride 36 par emmanchement à force dans des perçages formés dans la bride 36 ou être soudés à cellé-ci. Les secteurs 28a formant la bride 28 sont ainsi solidarisés avec les plates-formes 22.

On note en outre que l'étanchéité à l'extrémité aval de l'espace 33 est réalisée au moyen d'un joint annulaire 37 de type « oméga » qui est maintenu dans une rainure de la bride 36 et s'appuie sur une surface aval de la bride 28. Les brides 28 et 36 ont ainsi une double fonction de support de joint d'étanchéité 37 et de support des moyens de blocage en rotation du distributeur. Le joint 37 est situé du côté externe de l'ensemble de doigts de blocage 35.

En variante, les doigts axiaux de blocage pourront être portés par la bride 28 et pénétrer dans des logements tels que des trous borgnes formés dans la bride 36.

Du côté extérieur, l'étanchéité à l'extrémité aval de l'espace 43 est assurée par un joint à lamelles 38 dont la base est maintenue dans un logement annulaire 29b s'ouvrant radialement vers l'extérieur et formée au sommet d'une bride annulaire 29 solidaire de la couronne sectorisée 26 et formée également de secteurs annulaires juxtaposés 29a au voisinage de l'extrémité aval du distributeur 20. Le joint 38 est maintenu au moyen de goupilles 38a traversant les ailes bordant le logement 29b et disposées axialement. Le joint 38 s'appuie sur une nervure annulaire continue 45a formée sur la face amont d'une bride radiale 45 solidaire de l'enveloppe 40 au niveau de l'extrémité aval du distributeur 20.

En fonctionnement, les efforts exercés sur les pales 21 du distributeur 20 par le flux gazeux issu de la chambre 10 sont repris par les doigts 35 via les vis 25 et la couronne 28, aucun effort circonférentiel n'étant imposé aux viroles 50 et 60. Ces dernières n'ont donc pas besoin d'être surdimensionnées. Il est même envisageable de les réaliser en CMC, lorsque la chambre est elle-même en CMC. Dans ce dernier cas, une sectorisation des viroles n'est plus nécessaire au niveau de la liaison avec la chambre de combustion mais peut être souhaitable au niveau de la liaison avec les enveloppes métalliques interne et externe.

Quant aux vis 25 et 27, elles peuvent être réalisées en matériau métallique, notamment lorsque les viroles de liaison sont métalliques, ou être réalisées en CMC.

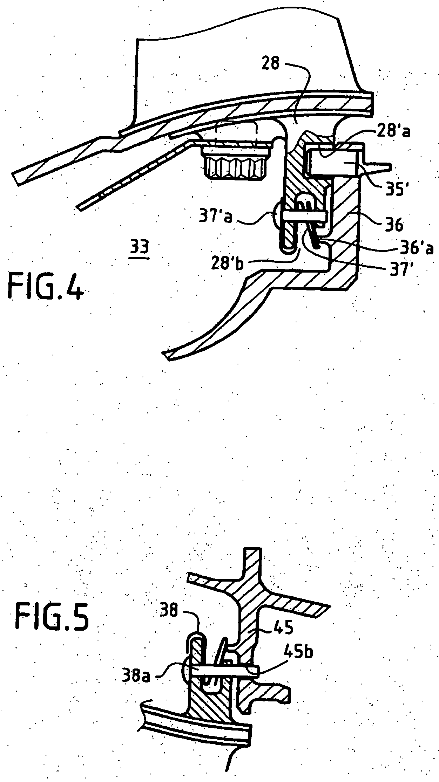

La figure 4 illustre un autre mode de réalisation qui se distingue de celui des figures 1 à 3 en ce que l'étanchéité à l'extrémité aval de l'espace 33 est réalisée par un joint à lamelles 37' et le blocage en rotation de la couronne 24 est réalisé par des doigts 35' situés du côté externe du joint 37' et pénétrant dans des trous borgnes oblongs 28'a formés dans la bride sectorisée 28. Cette dernière présente à son extrémité un logement annulaire 28'b dans lequel la base du joint à lamelles 37' est maintenue par des goupilles 37'a. A l'extérieur du logement annulaire 28'b, le joint à lamelles 37' s'appuie sur une nervure annulaire continue 36'a formée sur la face amont de la bride 36.

La figure 5 illustre encore un autre mode de réalisation qui se distingue de celui des figures 1 à 3 en ce qu'un blocage en rotation du distributeur 20 est réalisé également au niveau de la couronne externe 26.

Avantageusement, on utilise à cet effet les goupilles 38a en prolongeant celles-ci vers l'aval jusqu'à pénétrer dans des trous 45b formés dans la bride 45. Les goupilles 38a pourront éventuellement être surdimensionnées, à savoir avec un diamètre plus élevé en comparaison avec les dimensions suffisantes pour maintenir le joint d'étanchéité 38.

Le mode de réalisation de la figure 5, avec blocage en rotation au niveau des plates-formes internes et externes du distributeur est avantageux en ce qu'il permet de répartir les efforts transmis entre le distributeur et les enveloppes métalliques.

Bien entendu, on pourrait adopter, pour le blocage en rotation du distributeur au niveau des plates-formes externes, un montage similaire à celui utilisé dans le mode de réalisation de la figure 4 au niveau des plates-formes internes, à savoir avec des doigts de blocage portés par la bride 45 et pénétrant dans des trous borgnes de la bride 26.

## Revendications

1. Turbine à gaz comprenant :
- une chambre de combustion annulaire (10) ayant une paroi interne et une paroi externe,
- un distributeur (20) de turbine haute pression (HP) ayant une pluralité d'aubes fixes réparties autour d'un axe confondu avec celui de la chambre de combustion, les aubes ayant des pales (21) solidaires de plates-formes internes (22) et externes (23) en forme de secteurs d'anneaux juxtaposés dont les faces intérieures délimitent une veine d'écoulement dans le distributeur de turbine de flux gazeux issu de la chambre de combustion,
- des moyens de liaison pour relier mécaniquement le distributeur de turbine à des parties d'extrémité aval des parois interne et externe de la chambre de combustion, et
- des enveloppes métalliques interne (30) et externe (40) entre lesquelles l'ensemble formé par la chambre de combustion (10) et le distributeur de turbine (20) est maintenu,
- les parties d'extrémité aval (12a, 13a) des parois interne et externe (12, 13) de la chambre de combustion (10) sont appliquées contre les plates-formes respectivement internes (22) et externes (23) des aubes du distributeur de turbine jusqu'à l'extrémité aval des plates- formes pour réaliser l'étanchéité entre plates-formes internes et entre plates-formes externes, et **caractérisée en ce que**
- les moyens de liaison sont formés par des vis de liaison (25, 27) sensiblement radiales implantées dans des pales (21) d'aubes du distributeur de turbine en passant à travers des trous formés dans les parties d'extrémité des parois interne et externe de la chambre de combustion.

2. Turbine à gaz selon revendication 1, **caractérisée en ce que** l'ensemble formé par la chambre de combustion (10) et le distributeur (20) de turbine est maintenu entre les enveloppes métalliques interne (30) et externe (40) au moyen de viroles respectives interne (50) et externe (60) qui ont des parties d'extrémité (52, 62) reliées à l'ensemble formé par la chambre de combustion et le distributeur de turbine au moyen desdites vis de liaison (25, 27).

3. Turbine à gaz selon l'une quelconque des revendications 1 et 2, **caractérisée en ce que** la partie d'extrémité aval (12a) de la paroi interne (12) de la chambre de combustion (10) est pincée entre les plates-formes internes (22) des aubes et une couronne interne (24) s'appuyant sur la face extérieure de la partie d'extrémité de la paroi interne de la chambre de combustion.

4. Turbine à gaz selon revendication 3, **caractérisée en ce que** ladite partie d'extrémité (52) de la virole interne (50) vient en appui sur une face extérieure de la couronne interne (24).

5. Turbine à gaz selon l'une quelconque des revendications 1 et 2, **caractérisée en ce que** la partie d'extrémité aval (13a) de la paroi externe (13) de la chambre de combustion (10) est pincée entre les plates-formes externes (23) des aubes et une couronne externe (26) s'appuyant sur la face extérieure de la partie d'extrémité aval de la paroi externe de la chambre de combustion.

6. Turbine à gaz selon revendication 5, **caractérisée en ce que** ladite partie d'extrémité (62) de la virole externe vient en appui sur une face extérieure de la couronne externe (26).

7. Turbine à gaz selon l'une quelconque des revendications 3 et 4, **caractérisée en ce que** la couronne interne (24) est solidaire d'une bride radiale annulaire (28) qui coopère avec une bride radiale annulaire (36) de l'enveloppe métallique interne (30) pour maintenir entre elles un joint d'étanchéité annulaire (37) fermant l'espace (33) compris entre la paroi interne de la chambre de combustion (10) et l'enveloppe métallique interne (30) au voisinage de l'extrémité aval du distributeur de turbine (20).

8. Turbine à gaz selon l'une quelconque des revendications 5 et 6, **caractérisée en ce que** la couronne externe (26) est solidaire d'une bride radiale annulaire (29) qui coopère avec une bride radiale annulaire (45) solidaire de l'enveloppe métallique externe (40) pour maintenir entre elles un joint d'étanchéité annulaire (38) fermant l'espace (43) compris entre la paroi externe de la chambre de combustion (10) et l'enveloppe métallique externe (40) au voisinage de l'extrémité aval du distributeur de turbine (20).

9. Turbine à gaz selon l'une quelconque des revendications 1 à 8, **caractérisée en ce que** des moyens de blocage sont en outre prévus pour immobiliser en rotation le distributeur de turbine (20) afin d'éviter que des efforts en rotation induits par l'interaction entre les aubes fixes du distributeur de turbine et le flux gazeux issu de la chambre de combustion (10) soient transmis aux viroles interne et externe (30, 60).

10. Turbine à gaz selon les revendications 7, 8 et 9, **caractérisée en ce que** les moyens de blocage comportent des éléments de blocage mutuel en rotation agissant sur l'une au moins des paires de brides radiales entre (24-36 ; 29-45) lesquelles des joints d'étanchéité annulaires (37, 38) sont maintenus.

## Patentansprüche

1. Gasturbine, umfassend
- eine ringförmige Brennkammer (10) mit einer Innenwand und einer Außenwand,
- ein Leitrad (20) einer Hochdruckturbine (HP) mit einer Vielzahl von Leitschaufeln, die um eine Achse, welche mit derjenigen der Brennkammer zusammenfällt, verteilt sind, wobei die Schaufeln Blätter (21) haben, die mit nebeneinander liegenden, ringsektorenförmigen Innen- (22) und Außenplattformen (23), deren Innenseiten einen Strömungskanal in dem Turbinenleitrad eines aus der Brennkammer stammenden Gasstroms begrenzen, fest verbunden sind,
- Verbindungsmittel, um das Turbinenleitrad mit stromabwärtigen Endteilen der Innen- und der Außenwand der Brennkammer mechanisch zu verbinden, und
- einen inneren (30) und einen äußeren (40) Metallmantel, zwischen denen die durch die Brennkammer (10) und das Turbinenleitrad (20) gebildete Anordnung gehalten ist,
- die stromabwärtigen Endteile (12a, 13a) der Innen- und der Außenwand (12, 13) der Brennkammer (10) sind an die Innen- (22) bzw. die Außenplattformen (23) der Schaufeln des Turbinenleitrades bis zum stromabwärtigen Ende der Plattformen angelegt, um die Dichtigkeit zwischen Innenplattformen und zwischen Außenplattformen herzustellen,
**dadurch gekennzeichnet, dass**
- die Verbindungsmittel durch im Wesentliche radiale Verbindungsschrauben (25, 27) gebildet sind, die unter Durchgreifen von in den Endteilen der Innen- und der Außenwand der Brennkammer ausgebildeten Löchern in Blätter (21) von Schaufeln des Turbinenleitrades eingesetzt sind.

2. Gasturbine nach Anspruch 1, **dadurch gekennzeichnet, dass** die durch die Brennkammer (10) und das Turbinenleitrad (20) gebildete Anordnung zwischen dem inneren (30) und dem äußeren (40) Metallmantel mittels jeweiliger Innen- (50) und Außenringe (60) gehalten ist, die Endteile (52, 62) aufweisen, welche mit der durch die Brennkammer und das Turbinenleitrad gebildeten Anordnung mittels der Verbindungsschrauben (25, 27) verbunden sind.

3. Gasturbine nach einem der Ansprüche 1 und 2, **dadurch gekennzeichnet, dass** der stromabwärtige Endteil (12a) der Innenwand (12) der Brennkammer (10) zwischen den Innenplattformen (22) der Schaufeln und einem Innenkranz (24), der sich an der Außenseite des Endteils der Innenwand der Brennkammer abstützt, eingeklemmt ist.

4. Gasturbine nach Anspruch 3, **dadurch gekennzeichnet, dass** der Endteil (52) des Innenrings (50) an einer Außenseite des Innenkranzes (24) zur Anlage kommt.

5. Gasturbine nach einem der Ansprüche 1 und 2, **dadurch gekennzeichnet, dass** der stromabwärtige Endteil (13a) der Außenwand (13) der Brennkammer (10) zwischen den Außenplattformen (23) der Schaufeln und einem Außenkranz (26), der sich an der Außenseite des stromabwärtigen Endteils der Außenwand der Brennkammer abstützt, eingeklemmt ist.

6. Gasturbine nach Anspruch 5, **dadurch gekennzeichnet, dass** der Endteil (62) des Außenrings an einer Außenseite des Außenkranzes (26) zur Anlage kommt.

7. Gasturbine nach einem der Ansprüche 3 und 4, **dadurch gekennzeichnet, dass** der Innenkranz (24) mit einem radialen Ringflansch (28) fest verbunden ist, der mit einem radialen Ringflansch (36) des inneren Metallmantels (30) zusammenwirkt, um zwischen sich eine Ringdichtung (37), welche den Raum (33) zwischen der Innenwand der Brennkammer (10) und dem inneren Metallmantel (30) in der Nähe des stromabwärtigen Endes des Turbinenleitrades (20) schließt, zu halten.

8. Gasturbine nach einem der Ansprüche 5 und 6, **dadurch gekennzeichnet, dass** der Außenkranz (26) mit einem radialen Ringflansch (29) fest verbunden ist, der mit einem mit dem äußeren Metallmantel (40) fest verbundenen radialen Ringflansch (45) zusammenwirkt, um zwischen sich eine Ringdichtung (38), welche den Raum (43) zwischen der Außenwand der Brennkammer (10) und dem äußeren Metallmantel (40) in der Nähe des stromabwärtigen Endes des Turbinenleitrades (20) schließt, zu halten

9. Gasturbine nach einem der Ansprüche 1 bis 8, **dadurch gekennzeichnet, dass** ferner Blockiermittel vorgesehen sind, um das Turbinenleitrad (20) gegen ein Drehen festzulegen, um zu vermeiden, dass Drehkräfte, die durch die Wechselwirkung zwischen den Leitschaufeln des Turbinenleitrades und dem aus der Brennkammer (10) stammenden Gasstrom hervorgerufen werden, auf den Innen- und den Außenring (30, 60) übertragen werden.

10. Gasturbine nach den Ansprüchen 7, 8 und 9, **dadurch gekennzeichnet, dass** die Blockiermittel Elemente zum gegenseitigen Drehblockieren umfassen, die auf wenigstens eines der Paare von radialen Flanschen (24-36; 29-45), zwischen denen Ringdichtungen (37, 38) gehalten sind, wirken.

## Claims

1. A gas turbine comprising:
- an annular combustion chamber (10) having an inner wall and an outer wall;
- a high pressure (HP) turbine nozzle (20) having a plurality of stationary vanes distributed around an axis that coincides with the axis of the combustion chamber, the vanes having airfoils (21) secured to inner (22) and outer (23) platforms in the form of juxtaposed ring sectors with inside faces defining between them a flow path through the turbine nozzle for the gas stream coming from the combustion chamber;
- connection means for mechanically connecting the turbine nozzle to downstream end portions of the inner and outer walls of the combustion chamber; and
- inner (30) and outer (40) metal shrouds, the assembly constituted by the combustion chamber (10) and the turbine nozzle (20) being held between said inner and outer metal shrouds,
- the downstream end portions (12a, 13a) of the inner and outer walls (12, 13) of the combustion chamber (10) are pressed against the inner (22) and outer (23) platforms respectively of the vanes of the turbine nozzle all the way to the downstream ends of the platforms so as to ensure sealing between inner platforms and between outer platforms; and
**characterized in that**
- the connection means are formed by substantially radial connection screws (25, 27) implanted in vane airfoils (21) of the turbine nozzle, passing through holes formed in the end portions of the inner and outer walls of the combustion chamber.

2. A gas turbine according to claim 1, **characterized in that** the assembly constituted by the combustion chamber (10) and the turbine nozzle (20) is held between the inner (30) and outer (40) metal shrouds by means of respective inner (50) and outer (60) ferrules having end portions (52, 62) connected to the assembly formed by the combustion chamber and the turbine nozzle by means of said connection screws (25, 27).

3. A gas turbine according to any one of claims 1 and 2, **characterized in that** the downstream end portion (12a) of the inner wall (12) of the combustion chamber (10) is clamped between the inner platforms (22) of the vanes and an inner ring (24) pressing against the outside face of the end portion of the inner wall of the combustion chamber.

4. A gas turbine according to claim 3, **characterized in that** said end portion (52) of the inner ferrule (50) comes to press against an outside face of the inner ring (24).

5. A gas turbine according to any one of claims 1 and 2, **characterized in that** the downstream end portion (13a) of the outer wall (13) of the combustion chamber (10) is clamped between the outer platforms (23) of the vanes and an outer ring (26) pressing against the outside face of the downstream end portion of the outer wall of the combustion chamber.

6. A gas turbine according to claim 5, **characterized in that** said end portion (62) of the outer ferrule comes to press against an outside face of the outer ring (26).

7. A gas turbine according to any one of claims 3 and 4, **characterized in that** the inner ring (24) is secured to an annular radial flange (28) that cooperates with an annular radial flange (36) of the inner metal shroud (30) to hold between them an annular sealing gasket (37) closing the space (33) extending between the inner wall of the combustion chamber (10) and the inner metal shroud (30) in the vicinity of the downstream end of the turbine nozzle (20).

8. A gas turbine according to any one of claims 5 and 6, **characterized in that** the outer ring (26) is secured to an annular radial flange (29) which cooperates with an annular radial flange (45) integral with the outer metal shroud (40) to hold between them an annular sealing gasket (38) closing the space (43) extending between the outer wall of the combustion chamber (10) and the outer metal shroud (40) in the vicinity of the downstream end of the turbine nozzle (20).

9. A gas turbine according to any one of claims 1 to 8, **characterized in that** locking means are also provided to prevent the turbine nozzle (20) from turning so as to avoid turning forces induced by the interaction between the stationary vanes of the turbine nozzle and the gas stream coming from the combustion chamber (10) being transmitted to the inner and outer ferrules (30, 60).

10. A gas turbine according to claims 7, 8 and 9, **characterized in that** the locking means comprise elements providing mutual locking in turning acting on at least one of the pairs of radial flanges (24-36; 29-45) between which annular sealing gaskets (37, 38) are held.
